# EUROPEAN PATENT APPLICATION

(11) **EP 4 566 815 A1**
(43) Date of publication of application: **11.06.2025**
(21) Application number: 23850054.0
(22) Date of filing: 31.07.2023
(51) Int. Cl.: B32B 27/10, B32B 27/18, B32B 27/40, B65D 65/40

(54) **MULTILAYER BODY AND PAPER PROCESSED ARTICLE USING SAME**

(30) Priority: 01.08.2022 JP 2022122966
(71) Applicant: Oji Holdings Corporation, Chuo-ku Tokyo 104-0061 (JP)
(72) Inventor: NOISHIKI, Yasutomo, Tokyo 104-0061 (JP); SHAMOTO, Yuta, Tokyo 104-0061 (JP); NAMIOKA, Moeka, Tokyo 104-0061 (JP); WAKABAYASHI, Misaki, Tokyo 104-0061 (JP); MIYAKE, Yutaro, Tokyo 104-0061 (JP)
(74) Representative: Jones, Nicholas Andrew
(86) International application number: PCT/JP2023/027997
(87) International publication number: WO 2024/029500

(57) **Abstract**

The present invention provides a laminate including a thermoplastic resin layer, a paper substrate layer, a barrier layer and a sealant layer, in the order mentioned, wherein the barrier layer contains a polyurethane resin, a swellable layered silicate and a cationic resin.

## Description

### TECHNICAL FIELD

The present disclosure relates to a laminate having barrier properties. Further, the present disclosure relates to a paper product using the laminate.

### BACKGROUND ART

Packaging materials produced by imparting gas barrier properties such as oxygen barrier properties and/or imparting water vapor barrier properties to paper substrates have been conventionally used for the packaging of food, medical supplies, electronic components and the like, for example, in order to prevent a decrease in the quality of the contents.

To impart water vapor barrier properties and/or gas barrier properties to a paper substrate, a method of laminating a synthetic resin film having excellent gas barrier properties or the like to a paper substrate is generally used. However, in a material in which a synthetic resin film or the like is laminated on a paper substrate, it is difficult to recycle the paper, the synthetic resin and the like after use, causing an environmental problem.

Therefore, the development of a material having gas barrier properties which is produced using a paper as a substrate, without using a synthetic resin film or the like, is underway. For example, Patent Document 1 (JP 2021-138434 A) discloses a technique for controlling hydroxyl groups and acid groups in a resin to be used in a gas barrier layer, in a paper barrier material in which the gas barrier layer and a heat seal layer are provided on a paper substrate in the order mentioned.

### SUMMARY OF THE INVENTION

In the paper barrier material disclosed in Patent Document 1, the barrier layer is a single layer, and it is possible to decrease the amount of plastic material. However, this is not sufficient from the viewpoints of achieving higher gas barrier properties and obtaining both the gas barrier properties and the water vapor barrier properties. An object of the present disclosure is to provide a laminate in which both high gas barrier properties and water vapor barrier properties are achieved, and further, in which the paper ratio (biomass ratio) is improved.

The present disclosure relates to the following <1> to <10>.
<1> A laminate including a thermoplastic resin layer, a paper substrate layer, a barrier layer and a sealant layer, in the order mentioned,
   wherein the barrier layer contains a polyurethane resin, a swellable layered silicate and a cationic resin.
<2> The laminate according to <1>, wherein the polyurethane resin includes at least one selected from the group consisting of a polyurethane containing a structural unit derived from metaxylylene diisocyanate, and hydroxypolyurethane.
<3> The laminate according to <1> or <2>, wherein the barrier layer contains from 1.0 to 20.0% by mass of the cationic resin.
<4> The laminate according to any one of <1> to <3>, wherein the barrier layer contains from 30.0 to 80.0% by mass of the polyurethane resin.
<5> The laminate according to any one of <1> to <4>, wherein the barrier layer contains from 5.0 to 30.0% by mass of the swellable layered silicate.
<6> The laminate according to any one of <1> to <5>,
   wherein the barrier layer further contains at least one selected from the group consisting of a water-suspendable polymer other than the polyurethane resin and a water-soluble polymer other than the polyurethane resin,
   wherein the water-suspendable polymer includes an olefin-unsaturated carboxylic acid-based copolymer, and
   wherein the water-soluble polymer includes at least one selected from the group consisting of a vinyl alcohol-based polymer and a polyalkyleneimine.
<7> The laminate according to any one of <1> to <6>,
   wherein the barrier layer further contains the water-suspendable polymer other than the polyurethane resin, and the water-soluble polymer other than the polyurethane resin, and
   wherein the barrier layer contains the water-suspendable polymer and the water-soluble polymer, at least in the following combination (A) or (B):
      (A) an ethylene-acrylic acid copolymer as the water-suspendable polymer, and polyvinyl alcohol as the water-soluble polymer; or
      (B) an ethylene-acrylic acid copolymer as the water-suspendable polymer, and polyvinyl alcohol and polyethyleneimine as the water-soluble polymers.
<8> The laminate according to <6> or <7>, wherein the barrier layer contains a total of from 2.0 to 50.0% by mass of the water-suspendable polymer other than the polyurethane resin and the water-soluble polymer other than the polyurethane resin.
<9> The laminate according to any one of <6> to <8>, wherein the ratio (the mass of the polyurethane resin: the total mass of the water-suspendable polymer and the water-soluble polymer) of the mass of the polyurethane resin and the total mass of the water-suspendable polymer other than the polyurethane resin and the water-soluble polymer other than the polyurethane resin, in the barrier layer, is from 50:50 to 95:5.
<10> The laminate according to any one of <1> to <9>, wherein the laminate includes an undercoating layer between the paper substrate layer and the barrier layer.
<11> The laminate according to any one of <1> to <10>, wherein the sealant layer contains a water-dispersible resin.
<12> A paper product using the laminate according to any one of <1> to <11>.

### MODE FOR CARRYING OUT THE INVENTION

In the present specification, the expression "from X to Y" used to indicate a range means "X or more and Y or less". When numerical ranges are described in stages, the upper limit and the lower limit of each numerical range can be combined as desired. In the present specification, the term "(meth)acrylic" is a generic term referring to both "acrylic" and "methacrylic". Further, in the present specification, operations and the measurements of physical properties and the like are carried out under the conditions of room temperature (from 20 to 25°C) and a relative humidity of from 40 to 50% RH, unless otherwise specified.

One embodiment of the present disclosure is a laminate including a thermoplastic resin layer, a paper substrate layer, a barrier layer and a sealant layer, in the order mentioned, wherein the barrier layer contains a polyurethane resin, a swellable layered silicate and a cationic resin.

According to the present embodiment, it is possible to provide a laminate in which both high gas barrier properties and water vapor barrier properties are achieved, and further, in which the paper ratio (biomass ratio) is improved.

In the present specification, the term "gas barrier properties" refers to "oxygen barrier properties" unless otherwise specified.

### < Thermoplastic Resin Layer >

The thermoplastic resin layer is a layer that constitutes the outer surface (printing surface) of a paper product (such as a paper container for liquid) when forming the paper product, and the thermoplastic resin layer and the sealant layer are heat-sealed when forming the paper product. The thermoplastic resin layer is a layer containing a thermoplastic resin as a main component, and may contain a component other than the thermoplastic resin. In the present specification, the "main component" refers to a component whose content is 50% by mass or more, preferably 80% by mass or more, or 90% by mass or more (upper limit: 100% by mass).

The resin to be used in the thermoplastic resin layer is not particularly limited, as long as the resin can be heat-sealed to the sealant layer. However, it is preferred that the resin itself has heat sealability. Specific examples of the resin include: a polyester resin such as low density polyethylene (LDPE), linear low density polyethylene (LLDPE), medium density polyethylene (MDPE), high density polyethylene (HDPE), an ethylene-propylene copolymer, an ethylene-butene copolymer, a propylene-butene copolymer, a propylene homopolymer, a propylene-ethylene random copolymer, a propylene-ethylene block copolymer, a propylene-ethylene-butene copolymer, an ethylene-vinyl acetate copolymer, an ethylene-acrylic acid copolymer, an ethylene-methacrylic acid copolymer, an ethylene-methyl acrylate copolymer, an ethylene-ethyl acrylate copolymer, an ethylene-methyl methacrylate copolymer, a cyclohexanedimethanol-modified polyethylene terephthalate copolymer, polymethylpentene, polyethylene terephthalate (PET), polybutylene terephthalate (PBT) and a polyester copolymer; polystyrene; polyvinyl chloride; an acrylonitrile-butadiene-styrene (ABS) resin; an acrylic resin; a modified polyphenylene ether (PPE); a polyamide resin; and a biodegradable resin such as polylactic acid (PLA), polyhydroxybutyric acid (PHB), polybutylene succinate (PBS), poly(butylene adipate-co-butylene terephthalate) (PBAT), polycaprolactone (PCL) and poly(3-hydroxybutyrate-co-3-hydroxyhexanoate) (PHBH). These resins may be used singly, or in combination of two or more kinds thereof.

The method of forming the thermoplastic resin layer is not particularly limited. The thermoplastic resin layer may be formed by laminating any of the above-described resins using a known method. Alternatively, the thermoplastic resin layer may be formed by coating a coating liquid obtained by dissolving or dispersing any of the above-described resins in a solvent. In the case of forming the thermoplastic resin layer by lamination, the resin to be used in the thermoplastic resin layer preferably includes at least one selected from the group consisting of polyethylene and a biodegradable resin, more preferably includes at least one selected from the group consisting of low density polyethylene (LDPE), linear low density polyethylene (LLDPE) and a biodegradable resin, sill more preferably includes at least one selected from the group consisting of low density polyethylene (LDPE) and linear low density polyethylene (LLDPE), and yet still more preferably includes low density polyethylene (LDPE). Polyethylene is available at low cost and has a moderate flexibility, and thus is preferably used as a material for a paper container for liquid. In the case of forming the thermoplastic resin layer by coating, the resin to be used in the thermoplastic resin layer is preferably an acrylic resin. Acrylic resins (particularly, acrylic copolymers) have an advantage that the physical properties such as heat sealability, printing suitability and film-forming properties can be more easily controlled.

Either a commercially available product or a synthesized product can be used as the acrylic resin. Examples of the commercially available product include: BRITONE FC-640, manufactured by Sakata Inx Co., Ltd.; JONCRYL PDX-7326 and JONCRYL JDX-6500, manufactured by BASF Japan Ltd.; and SEIKOAT RE-2016 and SEIKOAT RE-2194, manufactured by SEIKO PMC Corporation.

The weight per unit area of the thermoplastic resin layer is not particularly limited, but is preferably from 1 to 50 g/m², and more preferably from 2 to 30 g/m². The thickness of the thermoplastic resin layer is not particularly limited, but is preferably from 5 to 100 µm, and more preferably from 10 to 50 µm, from the viewpoint of forming processability.

The thermoplastic resin layer may be formed as a single layer made of a single resin, a single layer made of a mixture of a plurality of resins, or a plurality of layers made of the same kind of resin or different kinds of resins.

### < Paper Substrate Layer >

The paper substrate to be used as the paper substrate layer is not particularly limited, and a known paper material can be used.

The pulp constituting the paper substrate preferably contains plant-derived pulp as a main component, and contains wood pulp as a main component. Examples of the wood pulp include hardwood pulp and softwood pulp. Examples of non-wood pulp include cotton pulp, hemp pulp, Kenaf pulp and bamboo pulp. The paper substrate may contain, as a subordinate paper material, a material other than pulp such as synthetic fibers, for example, rayon fibers or Nylon fibers, as long as the effects of the present disclosure are not impaired.

Specific examples of the paper substrate include bleached kraft papers, unbleached kraft papers, wood-free papers, paperboards, liner papers, coated papers, one side-glazed bleached kraft papers, glassine papers and graphene papers. Among these, the paper substrate is preferably a bleached kraft paper, an unbleached kraft paper, a wood-free paper, or a one side-glazed bleached kraft paper. The paper substrate is more preferably a bleached kraft paper or a one side-glazed bleached paper, and still more preferably a one side-glazed bleached kraft paper.

The paper substrate may contain an additive. Examples of the additive include a pH modifier (such as sodium hydrogen carbonate and sodium hydroxide), a dry strengthening agent (such as polyacrylamide and starch), a wet strengthening agent (any of a polyamide-polyamine-epichlorohydrin resin, a melamine-formaldehyde resin and a urea-formaldehyde resin), an internal sizing agent (such as a rosin-based agent and an alkyl ketene dimer), a drainage/retention aid, an antifoaming agent, a filler (such as calcium carbonate and talc) and a dye. These additives may be used singly, or in combination of two or more kinds thereof. The content of the additive is not particularly limited, and may be within the range usually used.

### (Basis Weight)

The basis weight of the paper substrate is not particularly limited, but is usually 20 g/m² or more and 600 g/m² or less. In the case of a packaging bag application, for example, the basis weight of the paper substrate is preferably 20 g/m² or more and 150 g/m² or less, more preferably 30 g/m² or more and 100 g/m² or less, and still more preferably 40 g/m² or more and 70 g/m² or less. Further, in the case of the application of a paper container for liquid, a paper container, a paper cup or the like, the basis weight is preferably 150 g/m² or more and 600 g/m² or less, and more preferably 200 g/m² or more and 400 g/m² or less. The basis weight of the paper substrate is measured in accordance with JIS P 8124: 2011.

### (Paper Thickness)

The paper thickness of the paper substrate is not particularly limited, but is usually 20 µm or more and 1,000 µm or less. In the case of a packaging bag application, for example, the paper thickness of the paper substrate is preferably 20 µm or more and 250 µm or less, more preferably 25 µm or more and 170 µm or less, and still more preferably 30 µm or more and 100 µm or less. Further, in the case of the application of a paper container for liquid, a paper container, a paper cup or the like, the paper thickness is preferably 150 µm or more and 1,000 µm or less, and more preferably 200 µm or more and 650 µm or less. The paper thickness of the paper substrate is measured in accordance with JIS P 8118: 2014.

### (Oken Smoothness)

The smoothness of the paper substrate is not particularly limited. For example, the Oken smoothness of the surface to be provided with the barrier layer is preferably 5 seconds or more, and more preferably 10 seconds or more. The upper limit of the Oken smoothness is not particularly limited. For example, the upper limit is preferably 2,000 seconds or less, and more preferably 1,000 seconds or less. The Oken smoothness of the paper substrate is measured in accordance with JIS P 8155: 2010.

### (Method of Producing Paper Substrate)

The paper substrate can be produced, for example, by a method of papermaking using a paper material containing pulp. The paper material may further contain an additive. Examples of the additive include additives exemplified above.

The paper material can be prepared by adding an additive(s) to a pulp slurry. The pulp slurry can be obtained by beating pulp in the presence of water. The method of beating pulp and the beating apparatus to be used are not particularly limited, and may be the same as a known beating method and beating apparatus. The content of the pulp in the paper material is not particularly limited, and may be within the range usually used. For example, the content of the pulp is 60% by mass or more and less than 100% by mass, with respect to the total mass of the paper material.

The papermaking using a paper material can be carried out by a usual method. The papermaking may be carried out, for example, by a method in which a paper material is cast on a wire cloth or the like, dehydrated to obtain a wet paper, a plurality of wet papers are layered, if necessary, and the resulting single-layer or multilayer wet paper is pressed, followed by drying. In the method described above, a single-ply paper is obtained in cases where a plurality of wet papers are not layered, and a multi-ply paper is obtained in cases where a plurality of wet papers are layered. At the time of layering a plurality of wet papers, an adhesive may be coated on the surface(s) (the surface(s) to be layered with another wet paper(s)) of the wet papers.

### < Barrier Layer >

The barrier layer contains a polyurethane resin, a swellable layered silicate and a cationic resin. The barrier layer having such a configuration makes it possible to obtain a laminate in which both high gas barrier properties and water vapor barrier properties are achieved, and further, in which the paper ratio (biomass ratio) is improved. The laminate may include one barrier layer, or two or more barrier layers, but preferably includes one (single) barrier layer, from the viewpoint of production cost.

### (Polyurethane Resin)

The barrier layer contains a polyurethane resin. The polyurethane resin is not particularly limited as long as the polyurethane resin is a polymer having a urethane bond, and a known polyurethane resin can be used.

The polyurethane resin preferably includes at least one selected from the group consisting of a polyurethane containing a structural unit derived from metaxylylene diisocyanate, and hydroxypolyurethane, and more preferably includes hydroxypolyurethane, from the viewpoint of achieving both higher water vapor barrier properties and gas barrier properties. In general, polyurethane resins are obtained by the reaction of a polyisocyanate and a polyol having two or more hydroxy groups. The "polyurethane containing a structural unit derived from metaxylylene diisocyanate" refers to a polyurethane resin obtained by the above-described reaction using a part or all of metaxylylene diisocyanate as the polyisocyanate. Further, the "hydroxypolyurethane" refers to a polyurethane resin having a hydroxyl group.

The hydroxypolyurethane preferably has a hydroxyl value of from 100 to 500 mg KOH/g, more preferably from 150 to 400 mg KOH/g, and still more preferably from 200 to 350 mg KOH/g. When the hydroxyl value of the hydroxypolyurethane is within the range described above, the cohesive force of the hydroxypolyurethane is increased, making it easier to achieve high barrier properties.

The hydroxypolyurethane may have an acid group. The hydroxypolyurethane preferably has an acid value of from 50 to 100 mg KOH/g, more preferably from 10 to 70 mg KOH/g, and still more preferably from 15 to 60 mg KOH/g.

The acid value and the hydroxyl value of the hydroxypolyurethane can be measured in accordance with JIS K 1557: 2007.

In cases where the polyurethane resin contains a structural unit derived from metaxylylene diisocyanate, the content of the structural unit derived from metaxylylene diisocyanate is preferably 50% by mole or more, with respect to the total amount of polyisocyanate-derived structural units. Such a polyurethane-based resin exhibits a high cohesive force due to hydrogen bonds and the stacking effect between xylylene groups, and thus is thought to have better gas barrier properties. The above-described content can be identified by a known analytical method such as ¹H-NMR.

The polyurethane resin preferably has a glass transition temperature of 50°C or higher, more preferably 65°C or higher, still more preferably 90°C or higher, and yet still more preferably 110°C or higher. The upper limit thereof is not particularly limited, and is, for example, 200°C or lower. The glass transition temperature of the polyurethane resin is a value measured in accordance with JIS K 7121:1987.

A commercially available product can be used as the hydroxypolyurethane. Examples of the commercially available product include HPU W-001, HPU W-003 and HPU W-013A (all of the above manufactured by Dainichiseika Color & Chemicals Mfg. Co., Ltd.). Further, examples of the polyurethane containing a structural unit derived from metaxylylene diisocyanate include TAKELAC WPB-341 (30) (manufactured by Mitsui Chemicals, Inc.).

The content of the polyurethane resin in the barrier layer is preferably from 30.0 to 80.0% by mass, more preferably from 40.0 to 75.0% by mass, still more preferably from 50.0 to 70.0% by mass, yet still more preferably from 55.0 to 68.0% by mass, and yet still more preferably from 60.0 to 66.0% by mass. When the content of the polyurethane resin is within the range described above, further increases in the water vapor barrier properties and the gas barrier properties are more easily achieved. Further, when the content is within the range described above, the strength of the barrier layer is improved, and the heat sealability of the sealant layer is improved.

### (Swellable Layered Silicate)

The barrier layer contains a swellable layered silicate in order to facilitate further increases in the water vapor barrier properties and the gas barrier properties. The swellable layered silicate has a flat plate-like shape.

When the swellable layered silicate is incorporated into the barrier layer, particles of the flat plate-shaped swellable layered silicate are more easily laminated approximately in parallel with the plane (surface) of the paper substrate. As a result, the area in which the particles of the swellable layered silicate are absent decreases in the planar direction, making it easier to reduce the permeation of water vapor. In the thickness direction, the particles of the flat plate-shaped swellable layered silicate are present aligned in parallel with respect to the plane of the paper substrate, and thus, water vapor in the layer permeates through the layer while detouring the particles of the swellable layered silicate, thereby reducing the permeation of water vapor by the maze effect. This allows the barrier layer to more easily exhibit excellent water vapor barrier properties.

The swellable layered silicate preferably has an average thickness of 200 nm or less. The average thickness of the swellable layered silicate is preferably 120 nm or less, more preferably 50 nm or less, still more preferably 25 nm or less, and particularly preferably 10 nm or less. When the swellable layered silicate has a smaller thickness, the number of laminated layers of the particles of the swellable layered silicate in the barrier layer will increase, making it possible to achieve higher water vapor barrier properties. The lower limit value of the thickness of the swellable layered silicate is not particularly limited, but is preferably 2 nm or more.

The average thickness of the swellable layered silicate in a state contained in the barrier layer, as used herein, is determined as follows. An enlarged photograph of a cross section of the barrier layer is captured using an electron microscope.

At this time, the magnification is set such that about 20 to 30 particles of the swellable layered silicate are included in the visual field. The thicknesses of individual particles of the swellable layered silicate in the visual field are measured. Then the mean value of the thus obtained thicknesses is calculated, and the calculated value is defined as the average thickness of the swellable layered silicate.

The swellable layered silicate preferably has an average length of 1 µm or more and 100 µm or less. When the average length of the swellable layered silicate is 1 µm or more, the particles of the swellable layered silicate are more easily aligned in parallel with respect to the paper substrate. Further, when the average length is 100 µm or less, there is less risk that some of the particles of the swellable layered silicate protrude from the barrier layer. The average length of the swellable layered silicate is more preferably 50 µm or less, still more preferably 30 µm or less, and particularly preferably 15 µm or less.

The average length of the swellable layered silicate in a state contained in the barrier layer, as used herein, is determined as follows. An enlarged photograph of a cross section of the barrier layer is captured using an electron microscope. At this time, the magnification is set such that about 20 to 30 particles of the swellable layered silicate are included in the visual field. The lengths (longer diameters) of individual particles of the swellable layered silicate in the visual field are measured. Then the mean value of the thus obtained lengths is calculated, and the calculated value is defined as the average length of the swellable layered silicate. The length of the swellable layered silicate is sometimes also referred to as "particle size".

The swellable layered silicate preferably has an aspect ratio of 50 or more. When the aspect ratio of the swellable layered silicate is 50 or more, a further increase in the water vapor barrier properties is more easily achieved. The aspect ratio of the swellable layered silicate is preferably 80 or more, more preferably 300 or more, and particularly preferably 500 or more. A higher aspect ratio leads to a more reduced permeation of water vapor, and thus, more improved water vapor barrier properties. In addition, a higher aspect ratio enables to further reduce the amount of the swellable layered silicate to be added. The upper limit of the aspect ratio is not particularly limited. However, the upper limit is preferably about 10,000 or less, more preferably about 5,000 or less, and still more preferably about 2,000 or less, from the viewpoint of the viscosity of the coating liquid. That is, examples of preferred ranges of the aspect ratio include the ranges of: 50 or more and 10,000 or less, 80 or more and 5,000 or less, 300 or more and 2,000 or less, and 500 or more and 2,000 or less. As described above, the aspect ratio as used herein is a value obtained by capturing an enlarged photograph of a cross section of the barrier layer using an electron microscope, and dividing the resulting average length of the swellable layered silicate by the average thickness thereof.

Specific examples of the swellable layered silicate include: a mica, including those belonging to the mica group and the brittle mica group, a bentonite, kaolinite (kaolin mineral), pyrophyllite, talc, smectite, vermiculite, chlorite, septechlorite, serpentine, stilpnomelane and montmorillonite.

Among these, in particular, the barrier layer preferably contains one or more selected from micas and bentonites, and more preferably contains a mica or a bentonite, from the viewpoint of improving the barrier properties. Specific examples of mica include synthesized micas (such as swellable micas and non-swellable micas), muscovite, sericite, phlogopite, biotite, fluorine phlogopite (artificial mica), red mica, soda mica, vanadium mica, illite, tin mica, paragonite and brittle mica. Specific examples of bentonites include montmorillonite. These swellable layered silicates may be used singly, or in combination of two or more kinds thereof.

The swellable layered silicate is a layered inorganic compound which is swellable in water, and in which the layers easily cleave by shear and split into layers with a nanometer-order thickness. By combining the polyurethane resin and the swellable layered silicate, the swellable layered silicate having a small thickness and a high aspect ratio is dispersed, in a polyurethane resin film which originally has a high gas barrier performance, and an even higher gas barrier performance is achieved by the maze effect.

Examples of the swellable layered silicate include sodium tetrasilicic mica, sodium hectorite, lithium taeniolite, fluorine phlogopite, sodium smectite and sodium montmorillonite.

The swellable layered silicate is preferably a swellable mica such as sodium tetrasilicic mica. Among the commercially available products of the swellable layered silicate, example of the swellable mica include NTO-05 (manufactured by Topy Industries, Ltd.) and SOMASIF ME300B-4T (manufactured by Katakura & Co-op Agri Corporation).

The content of the swellable layered silicate in the barrier layer is preferably from 5.0 to 30.0% by mass, more preferably from 10.0 to 25.0% by mass, and still more preferably from 13.0 to 24.0% by mass. When the content of the swellable layered silicate is within the range described above, further increases in the water vapor barrier properties and the gas barrier properties are more easily achieved.

### (Cationic Resin)

The barrier layer further contains a cationic resin, in addition to the polyurethane resin and the swellable layered silicate. The combined use of a flat inorganic compound and a cationic resin greatly improves the gas barrier properties and the water vapor barrier properties, particularly, the water vapor barrier properties.

Since the surfaces of the particles of the swellable layered silicate are prone to be anionically charged and the ends of the particles thereof are prone to be cationically charged, the surfaces and the ends of the particles are prone to be drawn to each other to form a card-house aggregation structure. By adding a cationic resin, anionic groups on the particle surfaces can be capped with cations, enabling to destroy the card-house aggregation structure. Therefore, the three-dimensional aggregation of the particles of the swellable layered silicate can be reduced to allow the particles of the swellable layered silicate to be aligned in parallel with the plane of the paper substrate, making it possible for the maze effect to be sufficiently exhibited. As a result, extremely high gas barrier properties and water vapor barrier properties can be achieved.

Specific examples of the cationic resin include polyamide compounds, modified polyamide-based compounds, polyamine compounds, modified polyamine compounds, polyamide amine-epihalohydrin or formaldehyde condensation reaction products, polyamine-epihalohydrin or formaldehyde condensation reaction products, polyamide polyurea-epihalohydrin or formaldehyde condensation reaction products, polyamine polyurea-epihalohydrin or formaldehyde condensation reaction products, polyamideamine polyurea-epihalohydrin or formaldehyde condensation reaction products, polyamide polyurea compounds, polyamine polyurea compounds, polyamideamine polyurea compounds, polyamideamine compounds, polyvinyl pyridine, amino-modified acrylamide-based compounds, polyvinylamine and polydiallyldimethylammonium chloride.

Among these, the cationic resin is preferably a modified polyamide-based compound, and more preferably a modified polyamide-based resin. A commercially available product can be used as the modified polyamide-based resin, and examples thereof include SPI203 (50) H, manufactured by Taoka Chemical Co., Ltd.

The content of the cationic resin in the barrier layer can be selected as appropriate, depending on the types of the materials used for the barrier layer, such as the polyurethane resin and the swellable layered silicate. The content of the cationic resin in the barrier layer is preferably from 1.0 to 20.0% by mass, more preferably from 1.0 to 10.0% by mass, still more preferably from 1.5 to 8.0% by mass, yet still more preferably from 1.8 to 5.0% by mass, and particularly preferably from 2.0 to 4.5% by mass, from the viewpoint of further improving the barrier properties (particularly, the water vapor barrier properties) and/or the heat sealability.

The cationic resin preferably has a surface electric charge of from 0.1 to 10 meq/g, more preferably from 0.1 to 5.0 meq/g, still more preferably from 0.1 to 4.0 meq/g, yet still more preferably from 0.1 to 2.0 meq/g, and particularly preferably from 0.2 to 1.0 meq/g.

When the surface electric charge of the cationic resin is equal to or higher than the lower limit described above, the effect of adding the cationic resin can be more sufficiently obtained. When the surface electric charge is equal to or lower than the upper limit described above, on the other hand, the effect of the cationic resin can be more sufficiently obtained while reducing the aggregation of the particles of the swellable layered silicate.

The surface electric charge of the cationic resin is measured by the method described below. First, the polymer to be used as a sample is dissolved in water to obtain a solution with a polymer concentration of 1 ppm. To the resulting solution, 0.001 N sodium polyethylene sulfonate is added dropwise to measure the amount of electric charge, using a charge analyzer, Mutek Model PCD-04 (manufactured by BTG Inc.).

### (Water-Suspendable Polymer, Water-Soluble Polymer)

The barrier layer may further contain another resin(s), in addition to the polyurethane resin, to the extent that the above-described effects are not impaired. Examples of the other resin include, but not particularly limited thereto: polyolefin resins (such as polyethylene and polypropylene); vinyl chloride resins; styrene resins; styrene-butadiene copolymers; acrylonitrile-styrene copolymers; acrylonitrile/butadiene copolymers; ABS resins; AAS resins; AES resins; vinylidene chloride resins; polyurethane resins; poly-4-methylpentene-1 resins; polybutene-1 resins; vinylidene fluoride resins; vinyl fluoride resins; fluorine resins; polycarbonate resins; acetal resins; polyphenylene oxide resins; polyester resins; (such as polyethylene terephthalate and polybutylene terephthalate); polyphenylene sulfide resins; polyimide resins; polysulfone resins; polyethersulfone resins; aromatic polyester resins; polyarylate resins; olefin-unsaturated carboxylic acid copolymers; styrene-unsaturated carboxylic acid copolymers; acrylic resins; polyvinyl alcohol and modified resins thereof; polyacrylic acid and salts thereof; polysaccharide-based resins, such as cellulose derivatives and starch, and derivatives thereof; naturally-derived thermosetting resins, such as natural rubber and shellac, and modified products thereof. These resins may be used singly, or in combination of two or more kinds thereof.

The water-suspendable polymer other than the polyurethane resin preferably includes at least one selected from the group consisting of a styrene-butadiene-based copolymer, a styrene-acrylic copolymer, an olefin-unsaturated carboxylic acid-based copolymer and a polyolefin resin, and more preferably includes an olefin-unsaturated carboxylic acid-based copolymer. The water-suspendable polymers may be used singly, or in combination of two or more kinds thereof.

The water-soluble polymer other than the polyurethane resin preferably includes at least one selected from the group consisting of a vinyl alcohol-based polymer, a polyalkyleneimine, a (meth)acrylic acid-based polymer, polyethylene glycol, polyacrylamide, a polycarboxylic acid and a water-soluble cellulose derivative, and more preferably includes at least one selected from the group consisting of a vinyl alcohol-based polymer and a polyalkyleneimine. When the barrier layer contains a polyalkyleneimine, the effect of improving the adhesion between the barrier layer and the sealant layer can also be obtained. The water-soluble polymers may be used singly, or in combination of two or more kinds thereof.

The examination by the present inventors revealed that three components, namely, the polyurethane resin, the flat inorganic compound and the cationic resin, have good barrier properties, but does not have sufficient performance from the viewpoint of the film-forming properties of the barrier layer. However, the present inventors then discovered that the use of the water-suspendable polymer and/or the water-soluble polymer, in addition to the three components, namely, the polyurethane resin, the flat inorganic compound and the cationic resin, improves the film-forming properties of the barrier layer, and as a result, improves the water vapor barrier properties and the gas barrier properties. Hereinafter, the water-suspendable polymer and the water-soluble polymer other than the polyurethane resin are also collectively referred to as "film-forming aid".

In the case of forming the barrier layer by aqueous coating, the use of the water-soluble polymer provides a better effect of improving the film-forming properties as compared to using the water-suspendable polymer. Further, it is preferred to use the water-suspendable polymer in combination, in addition to the water-soluble polymer, from the viewpoint of improving the water resistance of the barrier layer, to achieve even better water vapor barrier properties. That is, the barrier layer preferably contains the water-suspendable polymer and the water-soluble polymer. At this time, the barrier layer preferably contains an olefin-unsaturated carboxylic acid-based copolymer and more preferably contains an ethylene-(meth)acrylic acid copolymer, as the water-suspendable polymer. Further, the barrier layer preferably contains a vinyl alcohol-based polymer and more preferably contains a polyvinyl alcohol, as the water-soluble polymer.

The mass-based ratio (water-suspendable polymer: water-soluble polymer) of the content of the water-suspendable polymer and the content of the water-soluble polymer, in the barrier layer, is preferably from 20:1 to 1:2, more preferably from 10:1 to 2:3, still more preferably from preferably 5:1 to 3:4, and yet still more preferably from 4:1 to 4:5.

In the case of using the water-suspendable polymer and the water-soluble polymer in combination, for example, it is preferred to use a combination of an ethylene-acrylic acid copolymer as the water-suspendable polymer, and polyvinyl alcohol as the water-soluble polymer. At this time, another water-suspendable polymer and/or another water-soluble polymer, such as polyethyleneimine, may also be used in combination. That is, the barrier layer preferably contains the water-suspendable polymer and the water-soluble polymer, and at this time, the barrier layer preferably contains the water-suspendable polymer and the water-soluble polymer, at least in the following combination (A) or (B):
(A) an ethylene-acrylic acid copolymer as the water-suspendable polymer, and polyvinyl alcohol as the water-soluble polymer; or
(B) an ethylene-acrylic acid copolymer as the water-suspendable polymer, and polyvinyl alcohol and polyethyleneimine as the water-soluble polymers.

### (Water-Suspendable Polymer)

### << Styrene-Butadiene-based Copolymer >>

The styrene-butadiene-based copolymer is a copolymer obtained by the emulsion polymerization of: a styrene-based compound such as styrene, α-methylstyrene, vinyltoluene, p-t-butylstyrene or chlorostyrene; a butadiene-based compound such as 1,3-butadiene, isoprene (2-methyl-1,3-butadiene), 2,3-dimethyl-1,3-butadiene or 1,3-pentadiene; and a monomer(s) composed of another compound(s) copolymerizable with these compounds.

The styrene-based compound is preferably styrene, and the butadiene-based compound is preferably 1,3-butadiene.

A commercially available product can also be used as the styrene-butadiene-based copolymer. For example, LX407 S12 (manufactured by Zeon Japan Co., Ltd.) or the like can be used as an acid-modified styrene-butadiene copolymer binder.

### << Styrene-Acrylic Copolymer >>

The styrene-acrylic copolymer is a copolymer obtained by the emulsion polymerization of: a styrene-based compound such as styrene, α-methylstyrene, vinyltoluene, p-t-butylstyrene or chlorostyrene; an acrylic compound such as acrylic acid, methacrylic acid, a (meth)acrylic acid ester, (meth)acrylamidepropanesulfonic acid or a sodium salt of (meth)acrylic acid sulfoalkyl (in which the alkyl group has 2 or more and 3 or less carbon atoms); and a monomer(s) composed of another compound(s) copolymerizable with these compounds. The styrene-based compound is preferably styrene. The acrylic compound is preferably acrylic acid, methacrylic acid, an acrylic acid ester or a methacrylic acid ester, and more preferably acrylic acid or an acrylic acid ester. The (meth)acrylic acid ester is preferably an acrylic acid alkyl ester, in which the alkyl group preferably has from 1 to 6 carbon atoms.

A commercially available product can also be used as the styrene-acrylic copolymer. For example, JONCRYL HSL-9012 (manufactured by BASF SE) or the like can be used as a styrene-acrylic copolymer binder.

### << Olefin-Unsaturated Carboxylic Acid-based Copolymer >>

The olefin-unsaturated carboxylic acid-based copolymer is a copolymer obtained by the emulsion polymerization of: an olefin, in particular, an α-olefin such as propylene, or ethylene; an unsaturated carboxylic acid such as acrylic acid, methacrylic acid, crotonic acid, cinnamic acid, itaconic acid, fumaric acid, maleic acid or butene tricarboxylic acid; an unsaturated polycarboxylic acid alkyl ester having at least one carboxy group, such as itaconic acid monoethyl ester, fumaric acid monobutyl ester or maleic acid monobutyl ester; and a monomer(s) composed of another compound(s) copolymerizable with these compounds.

The olefin is preferably ethylene or an α-olefin, and more preferably ethylene. The unsaturated carboxylic acid monomer is preferably acrylic acid, methacrylic acid, itaconic acid, fumaric acid or the like.

The olefin-unsaturated carboxylic acid-based copolymer is preferably an ethylene-(meth)acrylic acid copolymer, and more preferably an ethylene-acrylic acid copolymer.

The olefin-unsaturated carboxylic acid-based copolymer may specifically be, for example, an aqueous dispersion of an ammonium salt of an ethylene-acrylic acid copolymer, which is commercially available under the name of ZAIKTHENE ((registered trademark) AC (copolymerization ratio of acrylic acid: 20%; manufactured by Sumitomo Seika Chemicals Co., Ltd.), or the like, and can be obtained easily and used.

### << Polyolefin Resin >>

The polyolefin resin is preferably of a homopolymer or copolymer of a monomer(s) selected from the group consisting of ethylene and an α-olefin, and more preferably polyethylene. A commercially available product can also be used as the polyolefin. For example, HYDRECT HS (manufactured by DIC Corporation) or the like can be used as a polyolefin resin binder.

### (Water-Soluble Polymer)

### << Vinyl Alcohol-based Polymer >>

The vinyl alcohol-based polymer may be, for example, polyvinyl alcohol. The polyvinyl alcohol preferably has a degree of saponification of from 85.0 to 99.5% by mole, and more preferably from 90.0 to 99.0% by mole. A commercially available product can also be used as the polyvinyl alcohol. For example, EXCEVAL series (manufactured by Kuraray Co., Ltd.) or the like can be used.

### << Polyalkyleneimine >>

The polyalkyleneimine is preferably a polyalkyleneimine in which the alkylene group has 1 or more and 5 or less carbon atoms, and more preferably polyethyleneimine, from the viewpoint of the adhesion between the barrier layer and the sealant layer. The polyethyleneimine may be a linear polyethyleneimine or a branched polyethyleneimine. The weight average molecular weight thereof is not particularly limited, as well, but is preferably 300 or more and 1,000,000 or less, and more preferably 1,000 or more and 100,000 or less.

### << (Meth)acrylic Acid-based Polymer >>

The (meth)acrylic acid-based polymer may be, for example, polyacrylic acid, polymethacrylic acid, or a salt thereof. Examples of the salt include sodium poly(meth)acrylate and ammonium poly(meth)acrylate. A commercially available product can also be used as the (meth)acrylic acid-based polymer. For example, ARON A-30 (manufactured by Toagosei Co., Ltd.) or the like can be used as an aqueous solution of ammonium polyacrylate.

### << Polyethylene Glycol >>

It is possible to use polyethylene glycol having any degree of polymerization and any weight average molecular weight, as the polyethylene glycol. However, the weight average molecular weight is preferably within the range of 60,000 or more and 250,000 or less, and more preferably 100,000 or more and 170,000 or less. The weight average molecular weight is a value measured by gel permeation chromatography (standard material: polystyrene).

Examples of commercially available products of the polyethylene glycol include ALKOX R-150 and R-400, manufactured by Meisei Chemical Works, Ltd.

### << Polyacrylamide >>

A known polyacrylamide can be used as the polyacrylamide. The degree of polymerization and the weight average molecular weight of the polyacrylamide are not particularly limited.

### << Polycarboxylic Acid >>

Examples of the polycarboxylic acid include polymaleic acid, an acrylic acid-maleic acid copolymer, and polyglucuronic acid.

### << Water-Soluble Cellulose Derivative >>

Examples of the water-soluble cellulose derivative include methylcellulose, hydroxymethylcellulose, hydroxyethylcellulose, carboxymethylcellulose, hydroxypropylcellulose, methylhydroxypropylcellulose and methylhydroxyethylcellulose.

The weight average molecular weight of the water-suspendable polymer and the water-soluble polymer is preferably 10,000 or more, and more preferably 20,000 or more, and at the same time, preferably 10,000,000 or less, and more preferably 5,000,000 or less. The weight average molecular weight of the water-suspendable polymer is measured by gel permeation chromatography (standard material: polystyrene). The weight average molecular weight of the water-soluble polymer is measured by gel permeation chromatography (standard material: polyethylene glycol).

The total content of the water-suspendable polymer other than the polyurethane resin and the water-soluble polymer other than the polyurethane resin, in the barrier layer, is preferably from 2.0 to 50.0% by mass, more preferably from 5.0 to 45.0% by mass, still more preferably from 10.0 to 35.0% by mass, and yet still more preferably from 15.0 to 25.0% by mass. When the total content of the polymers is within the range described above, further increases in the water vapor barrier properties and the gas barrier properties are more easily achieved.

The content of the water-suspendable polymer other than the polyurethane resin, in the barrier layer, is preferably from 1.0 to 40.0% by mass, more preferably from 5.0 to 30.0% by mass, still more preferably from 8.0 to 20.0% by mass, and yet still more preferably from 10.0 to 18.0% by mass. When the content of the water-suspendable polymer is within the range described above, further increases in the water vapor barrier properties and the gas barrier properties are more easily achieved.

The content of the water-soluble polymer other than the polyurethane resin, in the barrier layer, is preferably from 1.0 to 20.0% by mass, more preferably from 2.0 to 15.0% by mass, still more preferably from 2.0 to 10.0% by mass, and yet still more preferably from 3.0 to 9.0% by mass. When the content of the water-soluble polymer is within the range described above, further increases in the water vapor barrier properties and the gas barrier properties are more easily achieved.

The mass ratio (polyurethane resin: film-forming aid) of the polyurethane resin and the film-forming aid, in the barrier layer, is preferably from 50:50 to 95:5, more preferably from 55:45 to 90:10, still more preferably from 60:40 to 85:15, and yet still more preferably from 65:35 to 85:15, from the viewpoint of achieving both the barrier properties (particularly, the gas barrier properties) and the film-forming properties. The mass ratio of the polyurethane resin and the film-forming aid is, in other words, the ratio (the mass of the polyurethane resin: the total mass of the water-suspendable polymer other than the polyurethane resin and the water-soluble polymer other than the polyurethane resin) of the mass of the polyurethane resin and the total mass of the water-suspendable polymer other than the polyurethane resin and the water-soluble polymer other than the polyurethane resin.

If necessary, it is possible to add a dispersant, a surfactant, an antifoaming agent, a wetting agent, a dye, a color adjuster, a thickener and/or the like, as appropriate, to the barrier layer to the extent that the specific barrier properties described above are not impaired.

### (Coating Amount of Barrier Layer)

The coating amount of the barrier layer is not particularly limited. However, the coating amount, in terms of solid content after drying, is preferably 1 g/m² or more, and more preferably 2 g/m² or more, from the viewpoint of the barrier properties, and at the same time, preferably 15 g/m² or less, more preferably 10 g/m² or less, still more preferably 8 g/m² or less, and yet still more preferably 6 g/m² or less, from the viewpoint of re-disintegration properties. That is, examples of preferred ranges of the coating amount of the barrier layer include the ranges of: 1 g/m² or more and 15 g/m² or less, 1 g/m² or more and 10 g/m² or less, 2 g/m² or more and 8 g/m² or less, and 2 g/m² or more and 6 g/m² or less.

The thickness of the barrier layer is preferably from 1 to 20 µm, and more preferably from 2 to 10 µm.

### (Method of Forming Barrier Layer)

The method of forming the barrier layer is not particularly limited. For example, at least one resin selected from the group consisting of a water-suspendable polymer and a water-soluble polymer other than the polyurethane resin, a polyurethane resin, a swellable layered silicate and a cationic resin are dispersed in a solvent, to prepare a barrier layer coating liquid. The barrier layer is preferably formed by coating the resulting barrier layer coating liquid on a paper substrate, followed by drying.

The solvent to be used for the barrier layer coating liquid is not particularly limited, and it is possible to use water, or an organic solvent such as ethanol, isopropyl alcohol, methyl ethyl ketone or toluene. Among these, an aqueous medium is preferred, and water is more preferred as a dispersion medium for the barrier layer coating liquid, from the viewpoint that the problems of volatile organic solvents can be avoided. In the present specification, the "aqueous medium" refers to a medium that contains 50% by mass or more of water.

The apparatus to be used for coating the barrier layer coating liquid is not particularly limited, and can be selected as appropriate from commonly used coating apparatuses, and used. Examples of the apparatus include various types of known coating apparatuses, such as an air knife coater, a blade coater, a gravure coater, a rod blade coater, a roll coater, a reverse roll coater, a Mayer bar coater, a curtain coater, a die slot coater, a champlex coater, a metering blade-type size press coater, a short dwell coater, a spray coater, a gate roll coater and a lip coater.

### < Sealant Layer >

The sealant layer according to the present embodiment is a layer that constitutes the inner surface (wetted surface) of a paper product (such as a paper container for liquid) when forming the paper product, and the thermoplastic resin layer and the sealant layer are heat-sealed when forming the paper product. The sealant layer is a layer that melts by heat, an ultrasonic wave or the like, and adheres. The sealant layer is not particularly limited as long as the layer has heat sealability, and a known resin having heat sealability can be used. The sealant layer is a layer that contains a resin having heat sealability as a main component, and may contain a component(s) (such as a wax, a pigment and/or the like) other than the resin having heat sealability.

The method of forming the sealant layer is not particularly limited. The sealant layer may be formed by laminating a resin having heat sealability using a known method. Alternatively, the sealant layer may be formed by dissolving or dispersing a resin having heat sealability in a solvent to prepare a sealant layer coating liquid, and coating the coating liquid on the barrier layer, followed by drying.

The formation of the sealant layer by lamination may be carried out by forming an adhesive layer on one surface of a resin film having heat sealability, and pasting the adhesive layer and the barrier layer together by the dry lamination method, or alternatively, by coating a resin having heat sealability on the sealant layer by the extrusion lamination method, without using an adhesive. Aging may be performed, in the case of using the dry lamination method. The dry lamination method is more preferred, because the oxygen barrier properties may be decreased by the effect of heat during extrusion, in the extrusion lamination method.

In the case of forming the sealant layer by lamination, the resin having heat sealability is preferably at least one selected from the group consisting of polyethylene, a polyester resin and a biodegradable resin, more preferably at least one selected from the group consisting of low density polyethylene (LDPE), linear low density polyethylene (LLDPE), a polyester resin and a biodegradable resin, and still more preferably at least one selected from the group consisting of low density polyethylene (LDPE), linear low density polyethylene (LLDPE) and a polyester resin. The adhesive layer is not particularly limited, and it is possible to use a known adhesive which can be used for lamination. A commercially available product may also be used as the adhesive, and examples thereof include: DICDRY LX-500/K W-75 (a urethane-based adhesive), manufactured by DIC corporation; PASLIM VM001/108CP (a urethane-based adhesive having gas barrier properties), and MAXIVE M-100 (an epoxy-based adhesive having gas barrier properties) manufactured by Mitsubishi Gas Chemical Co., Ltd.

The resin film having heat sealability may be a vapor deposited film. That is, the laminate according to the present embodiment may further include a vapor deposited layer. The vapor deposited layer may be a vapor deposited layer of a metal such as aluminum, or may be a vapor deposited layer of an inorganic oxide such as silica or alumina. The vapor deposited layer may be formed by a known method such as vacuum vapor deposition or sputtering.

The thickness of the sealant layer, in the case of forming the layer by lamination, is not particularly limited. However, the thickness of the sealant layer is preferably 10 µm or more, and more preferably 15 µm or more, from the viewpoint of the heat sealability, and at the same time, preferably 75 µm or less, and more preferably 50 µm or less, from the viewpoint of reducing environmental burden. That is, examples of preferred ranges of the thickness of the sealant layer, in the case of forming the layer by lamination, include the ranges of: 10 µm or more 75 and µm or less, and 15 µm or more and 50 µm or less.

Further, the basis weight of the sealant layer is not particularly limited. However, the basis weight of the sealant layer is preferably 10 g/m² or more, and more preferably 15 g/m² or more, from the viewpoint of the heat sealability, and at the same time, preferably 75 g/m² or less, and more preferably 50 g/m² or less, from the viewpoint of reducing environmental burden. That is, examples of preferred ranges of the basis weight of the sealant layer include the ranges of: 10 g/m² or more and 75 g/m² or less, and 15 g/m² or more and 50 g/m² or less.

In the case of forming the sealant layer by dissolving or dispersing a resin having heat sealability in a solvent to prepare a sealant layer coating liquid, and coating the coating liquid on the barrier layer, followed by drying, the sealant layer coating liquid is preferably one obtained by dispersing a water-dispersible resin in an aqueous solvent. The term "aqueous" as used herein means 50% by mass or more of water is contained. That is, the sealant layer preferably contains a water-dispersible resin. Examples of the water-dispersible resin include those described above as examples of the water-suspendable polymer other than the polyurethane resin. Preferred examples thereof include: a polyolefin resin; an acrylic resin such as a styrene-acrylic copolymer and an ethylene-(meth)acrylic acid copolymer; an ethylene-vinyl acetate copolymer; a polyester resin; a rubber-based resin; a urethane resin; and a polyamide resin. These resins may be used singly, or in combination of two or more kinds thereof. Among these, the sealant layer preferably contains an acrylic resin, and more preferably contains an aqueous acrylic resin such as a styrene-acrylic copolymer. The advantage of acrylic resins is as described above. Either a commercially available product or a synthesized product can be used as the acrylic resin. Any of those exemplified in the section of < Thermoplastic Resin Layer > can be used as the commercially available product. In addition to these resins, a lubricant such as paraffin wax, carnauba wax or a polyolefin-based wax, and/or a pigment such as silica or kaolin, may also be added to the sealant layer, for the purpose of preventing blocking and improving oil resistance.

The solvent for dispersing the water-dispersible resin is not particularly limited, and it is possible to use water, or an organic solvent such as ethanol, isopropyl alcohol, methyl ethyl ketone, or toluene. Among these, an aqueous medium is preferred, and water is more preferred as a dispersion medium for the sealant layer coating liquid, from the viewpoint that the problems of volatile organic solvents can be avoided.

In the case of forming the sealant layer by coating, the coating amount of the sealant layer is not particularly limited. However, the coating amount, in terms of solid content after drying, is preferably 1 g/m² or more, and more preferably 2 g/m² or more, from the viewpoint of the heat sealability, and at the same time, preferably 20 g/m² or less, and more preferably 15 g/m² or less, from the viewpoint of the re-disintegration properties. Examples of preferred ranges of the coating amount of the sealant layer, in the case of forming the layer by coating, include the ranges of: 1 g/m² or more and 20 g/m² or less, and 2 g/m² or more and 15 g/m² or less.

### (Undercoating Layer)

The laminate according to the present embodiment may include an undercoating layer (hereinafter, also referred to as "clay coat layer") between the paper substrate and the barrier layer. This allows for sealing and smoothing the paper substrate, thereby improving the barrier properties.

The undercoating layer is preferably formed by coating an aqueous coating liquid obtained by dispersing an inorganic pigment and a binder in an aqueous medium, followed by drying. By forming the undercoating layer as described above, an undercoating layer having a high sealing effect can be obtained. Further, the components of the undercoating layer are redispersed in water upon re-disintegration, making it possible to recover pulp at a high recovery rate (namely, the resulting laminate has an excellent recyclability). Therefore, in the laminate, the undercoating layer is preferably formed by coating a coating liquid obtained by dispersing a binder in an aqueous medium, and preferably contains an inorganic pigment and a binder. Further, the binder is preferably a water-suspendable polymer.

The undercoating layer preferably contains an inorganic pigment and a binder, and is more preferably composed mainly of an inorganic pigment and a binder. The expression "the undercoating layer is composed mainly of an inorganic pigment and a binder" means that the total content of the inorganic pigment and the binder in the undercoating layer is preferably 50% by mass or more, more preferably 60% by mass or more, still more preferably 70% by mass or more, yet still more preferably 80% by mass or more, yet still more preferably 90% by mass or more, and particularly preferably 95% by mass or more (upper limit: 100% by mass or less). The undercoating layer may further contain an optional component, in addition to the inorganic pigment and the binder.

The inorganic pigment to be contained in the undercoating layer is not particularly limited, and examples thereof include clays such as kaolin, talc and mica, and metal oxides. The undercoating layer preferably contains a clay, and more preferably contains kaolin as the inorganic pigment. The inorganic pigments may be used singly, or in combination of two or more kinds thereof. The aspect ratio of the inorganic pigment is usually one or more, preferably 10 or more, more preferably 20 or more, and still more preferably 30 or more. The upper limit of the aspect ratio is not particularly limited, but is preferably 10,000 or less. From the viewpoint of allowing the inorganic pigment to be finely scattered in the undercoating layer, to improve the disintegration properties of the paper substrate at the time of recovery, the upper limit is preferably 50 or less, and more preferably 40 or less. That is, examples of preferred ranges of the aspect ratio of the inorganic pigment include the ranges of: one or more and 10,000 or less, 10 or more and 50 or less, 20 or more and 40 or less, and 30 or more and 40 or less. The aspect ratio can be determined by observation by an electron microscope, or by X-ray diffraction measurement.

The average particle diameter of the inorganic pigment is preferably 5 µm or less, more preferably 3 µm or less, and still more preferably 1 µm or less, from the viewpoint of allowing the inorganic pigment to be finely scattered in the undercoating layer, to improve the disintegration properties of the paper substrate at the time of recovery. The lower limit of the average particle diameter is not particularly limited, but is preferably 0.05 µm or more, and more preferably 0.10 µm or more. That is, examples of preferred ranges of the average particle diameter of the inorganic pigment include the ranges of: 0.05 µm or more and 5 µm or less, 0.10 µm or more and 3 µm or less, and 0.10 µm or more and 1 µm or less. The "average particle diameter" refers to the median diameter (d50) as determined by a laser diffraction/scattering particle size distribution measurement.

The content of the inorganic pigment in the undercoating layer is usually 50% by mass or more, may be 60% by mass or more, and preferably 65% by mass or more, from the viewpoint of the recyclability. At the same time, the content is preferably 98% by mass or less, more preferably 95% by mass or less, still more preferably 90% by mass or less, and yet still more preferably 85% by mass or less, from the viewpoint of increasing the adhesion between the undercoating layer and the paper substrate, to further improve the barrier properties. That is, examples of preferred ranges of the content of the inorganic pigment in the undercoating layer include the ranges of: 50% by mass or more and 98% by mass or less, 60% by mass or more and 95% by mass or less, 65% by mass or more and 90% by mass or less, and 65% by mass or more and 85% by mass or less.

In cases where the binder contained in the undercoating layer is a water-suspendable polymer, the glass transition temperature of the water-suspendable polymer is preferably 20°C or lower, and more preferably 10°C or lower, and at the same time, preferably -5°C or higher, from the viewpoint of the recyclability. A value measured by "Method of Measuring Transition Temperature of Plastics" (JIS K7121:2012) is used as the glass transition temperature of the water-suspendable polymer.

The binder to be contained in the undercoating layer is not particularly limited. Examples of the binder include: a styrene-butadiene-based resin; a (meth)acrylic (co)polymer; a styrene-(meth)acrylic resin; an olefin-unsaturated carboxylic acid-based copolymer, such as an ethylene-acrylic acid copolymer and an ethylene-methacrylic acid copolymer; and polylactic acid. The binder preferably includes one or more selected from the group consisting of a styrene-butadiene-based resin, a styrene-(meth)acrylic resin, an olefin-unsaturated carboxylic acid-based copolymer and polylactic acid, and more preferably includes one or more selected from the group consisting of a styrene-(meth)acrylic resin, an ethylene-(meth)acrylic acid copolymer and polylactic acid.

The (meth)acrylic (co)polymer is a (co)polymer of one or more monomers selected from the group consisting of (meth)acrylic acid and a (meth)acrylic acid ester. The (meth)acrylic acid ester is not particularly limited, but is preferably an alkyl ester of (meth)acrylic acid in which the alkyl group has 1 to 12 carbon atoms. The styrene-(meth)acrylic resin is a copolymer of styrene and at least one monomer selected from the group consisting of (meth)acrylic acid and a (meth)acrylic acid ester.

The content of the binder in the undercoating layer is usually 50% by mass or less, may be 40% by mass or less. The content is preferably 35% by mass or less from the viewpoint of the recyclability, and at the same time, preferably 2% by mass or more, more preferably 5% by mass or more, still more preferably 10% by mass or more, and yet still more preferably 15% by mass or more, from the viewpoint of increasing the adhesion between the undercoating layer and the paper substrate, to further improve the barrier properties. That is, examples of preferred ranges of the content of the binder in the undercoating layer include the ranges of: 2% by mass or more and 50% by mass or less, 5% by mass or more and 40% by mass or less, 10% by mass or more and 35% by mass or less, and 15% by mass or more and 35% by mass or less.

Examples of the optional component which may be contained in the undercoating layer include a dispersant, a surfactant, an antioxidant, an antistatic agent, a dye, a plasticizer, a lubricant, and a mold release agent.

The coating amount (solid content) of the undercoating layer is preferably 3 g/m² or more, and more preferably 5 g/m² or more, from the viewpoint of improving the sealing effect, and at the same time, preferably, 30 g/m² or less, and more preferably 20 g/m² or less, from the viewpoint of the recyclability. That is, examples of preferred ranges of the coating amount (solid content) of the undercoating layer include the ranges of: 3 g/m² or more and 30 g/m² or less, and 5 g/m² or more and 20 g/m² or less.

The method of forming the undercoating layer is not particularly limited. However, the undercoating layer is preferably formed by a method in which a dispersion liquid containing an inorganic pigment and a binder is coated on a paper substrate, followed by drying. The dispersion liquid containing an inorganic pigment and a binder is preferably one containing an aqueous medium as a solvent, such as an aqueous dispersion.

### (Other Layers)

The laminate according to the present embodiment may include a layer(s) other than the layers described above. For example, the laminate may include an adhesive layer (adhesive resin layer). In cases where even higher barrier properties are required, the laminate may include an inorganic material layer. Any known layer can be used as the adhesive layer and the inorganic material layer. The inorganic material layer may be, for example, a vapor deposited layer vapor-deposited on a resin film, a laminate of a resin film and an aluminum foil, or the like. As described above, the vapor deposited layer may be an aluminum vapor-deposited layer, an alumina vapor-deposited layer or a silica vapor-deposited layer. The laminate according to the present embodiment may further include an optional layer(s) such as a print layer, a light-shielding layer and/or the like.

### (Barrier Properties of Laminate)

The laminate according to the present embodiment preferably has a water vapor permeability of a laminate having barrier properties, as measured in accordance with JIS-Z-0208: 1976 under the conditions of 40°C and 90% RH, of less than 50 g/m²·day, more preferably 40 g/m²·day or less, still more preferably 30 g/m²·day or less, yet still more preferably 20 g/m²·day or less, yet still more preferably 15 g/m²·day or less, yet still more preferably 10 g/m²·day or less, and particularly preferably 8 g/m²·day or less. When the above-described water vapor permeability is within the range described above, the laminate has extremely-high water vapor barrier properties.

The lower limit of the water vapor barrier properties is not particularly limited, because the lower the better. However, the lower limit is preferably 0 g/m²·day or more, 1 g/m²·day or more, 2 g/m²·day or more, or 3 g/m²·day or more.

That is, examples of preferred ranges of the water vapor permeability of the laminate at 40°C and 90% RH include the ranges of: 0 g/m²·day or more and less than 50 g/m²·day, 0 g/m²·day or more and 40 g/m²·day or less, 1 g/m²·day or more and 30 g/m²·day or less, 1 g/m²·day or more and 20 g/m²·day or less, 2 g/m²·day or more and 15 g/m²·day or less, 2 g/m²·day or more and 10 g/m²·day or less, and 3 g/m²·day or more and 8 g/m²·day or less.

The water vapor permeability can be controlled, for example, by selecting the thickness of the barrier layer or the components contained in the barrier layer.

Further, the oxygen permeability at 23°C and 50% RH of the laminate when a CPP film is pasted thereon, is preferably 10.0 mL/m²·day·atm or less. The oxygen permeability described above is preferably 8.0 mL/m²·day·atm or less, more preferably 5.0 mL/m²·day·atm or less, still more preferably 3.0 mL/m²·day·atm or less, yet still more preferably 2.0 mL/m²·day·atm or less, yet still more preferably 1.5 mL/m²·day·atm or less, yet still more preferably 1.0 mL/m²·day·atm or less, and particularly preferably 0.5 mL/m²·day·atm or less. When the above-described oxygen permeability is within the range described above, the laminate has extremely-high oxygen barrier properties.

The lower limit of the oxygen permeability is not particularly limited, because the lower the better. However, the lower limit is preferably 0.0 mL/m²·day·atm or more, or 0.1 mL/m²·day·atm or more.

That is, examples of preferred ranges of the oxygen permeability at 23°C and 50% RH of the laminate when a CPP film is pasted thereon, include the ranges of: 0.0 mL/m²·day·atm or more and 10.0 mL/m²·day·atm or less, 0.0 mL/m²·day·atm or more and 8.0 mL/m²·day·atm or less, 0.0 mL/m²·day·atm or more and 5.0 mL/m²·day·atm or less, 0.0 mL/m²·day·atm or more and 3.0 mL/m²·day·atm or less, 0.1 mL/m²·day·atm or more and 2.0 mL/m²·day·atm or less, 0.1 mL/m²·day·atm or more and 1.5 mL/m²·day·atm or less, 0.1 mL/m²·day·atm or more and 1.0 mL/m²·day·atm or less, and 0.1 mL/m²·day·atm or more and 0.5 mL/m²·day·atm or less.

The oxygen permeability can be controlled, for example, by selecting the thickness of the barrier layer or the components contained in the barrier layer.

The oxygen permeability at 23°C and 85% RH of the laminate when a CPP film is pasted thereon, is preferably 10.0 mL/m²·day·atm or less, more preferably 8.0 mL/m²·day·atm or less, still more preferably 5.0 mL/m²·day·atm or less, yet still more preferably 3.0 mL/m²·day·atm or less, yet still more preferably 2.0 mL/m²·day·atm or less, yet still more preferably 1.5 mL/m²·day·atm or less, and particularly preferably 1.0 mL/m²·day·atm or less.

The lower limit of the above-described oxygen permeability is not particularly limited, because the lower the better. However, the lower limit is preferably 0.0 mL/m²·day·atm or more, or 0.1 mL/m²·day·atm or more.

That is, examples of preferred ranges of the oxygen permeability at 23°C and 85% RH of the laminate when a CPP film is pasted thereon, include the ranges of: 0.0 mL/m²·day·atm or more and 10.0 mL/m²·day·atm or less, 0.0 mL/m²·day·atm or more and 8.0 mL/m²·day·atm or less, 0.0 mL/m²·day·atm or more and 5.0 mL/m²·day·atm or less, 0.1 mL/m²·day·atm or more and 3.0 mL/m²·day·atm or less, 0.1 mL/m²·day·atm or more and 2.0 mL/m²·day·atm or less, 0.1 mL/m²·day·atm or more and 1.5 mL/m²·day·atm or less, and 0.1 mL/m²·day·atm or more and 1.0 mL/m²·day·atm or less.

When the oxygen permeability at 85% RH satisfies the range described above, sufficient gas barrier properties can be obtained even in a high humidity environment. The oxygen permeability at 85% RH can be adjusted within the range described above, by selecting the materials used for the barrier layer.

### (Ratio of Weight of Paper Substrate)

The ratio of the weight of the paper substrate is a value obtained by calculating the percentage of the weight of the paper substrate with respect to the total weight of the laminate, as follows. (Ratio of weight of paper substrate) = (weight of paper substrate)/(weight of laminate) × 100

The ratio of the weight of the paper substrate is preferably 75% or more, and more preferably 80% or more. When the ratio of the weight of the paper substrate is equal to or higher than the lower limit described above, it is possible to provide a laminate with a high biomass ratio and a reduced environmental burden. The upper limit of the above-described ratio is not particularly limited, but is usually 99% or less, and preferably 95% or less. That is, examples of preferred ranges of the ratio of the weight of the paper substrate include the ranges of: 75% or more and 99% or less, and 80% or more and 95% or less.

The laminate according to the present embodiment can be suitably used as a paper product, because of its excellent water vapor barrier properties and gas barrier properties. The paper product may be, for example, a liquid container, a paper container, a paper cup or the like. Further, the laminate can be suitably used as a paper product such as a packaging material for packaging food, a cosmetic, a daily commodity, a medical supply, an electronic component or the like. The laminate can be suitably used also as a paper product such as a packaging material for packaging contents with a scent or odor. It is also possible to suitably use the laminate as a paper product such as a packaging material for packaging food, a cosmetic, a daily commodity, a medical supply, an electronic component or the like which is exposed to high humidity conditions. The laminate may be a laminate having barrier properties.

### [Liquid Container]

The liquid container can be produced by forming the laminate according to the present embodiment by a known method. The shape of the liquid container is not particularly limited, and the liquid container may be, for example, a gable-top type, a rectangular parallelepiped type (such as a flat-top type, a brick type, or a straight type), a triangular pyramid type, a slant-top type, a regular tetrahedron type, a cup type or a tray type container. Further, the liquid container may have, for example, a hole for inserting a straw, a spout, a lid or the like, as long as the barrier properties thereof are not impaired.

The liquid to be contained in the liquid container may be either food or non-food. The liquid to be contained in the liquid container is not particularly limited, and examples thereof include: alcohol beverages such as Japanese sake, shochu and wine; milk beverages such as milk; discretionary beverages such as juice, coffee, green tea and black tea; food containing liquid, such as instant foods, microwavable foods, discretionary foods (such as yogurt, jelly and pudding) and prepared foods; pharmaceuticals; chemical products such as car waxes, shampoos, conditioners, detergents, bath salts, hair dyes, and toothpaste.

### EXAMPLES

Examples will be given below in order to specifically describe the present disclosure. However, the present disclosure is in no way limited to these Examples. The following operations are carried out under the conditions of a temperature of 25°C and a relative humidity of 50% RH, unless otherwise specified. The term "part(s)" and the symbol "%" in Examples and Comparative Examples refer to "part(s) by mass" and "% by mass", respectively, unless otherwise specified.

### < Example 1 >

To 33.3 parts by mass of an aqueous dispersion of a layered inorganic compound (a swellable mica, longer diameter (average length): 6.3 µm, aspect ratio: 1,260, average thickness: about 5 nm, solid concentration: 6% by mass, product name: NTS-10NC, manufactured by Topy Industries, Ltd.), 5.1 parts by mass of a self-emulsifying emulsion of an ethylene-acrylic acid copolymer (solid concentration: 29.2% by mass, product name: ZAIKTHENE AC, manufactured by Sumitomo Seika Chemicals Co., Ltd.) was added with stirring. Further, 26.7 parts by mass of a self-emulsifying aqueous emulsion of hydroxypolyurethane (solid concentration: 30% by mass, product name: HPU-WO13A, manufactured by Dainichiseika Color & Chemicals Mfg. Co., Ltd.; hydroxyl value: 235 mg KOH/g, acid value: 30 mg KOH/g, glass transition temperature: 70°C) was further added, followed by stirring. To the resulting mixture, 0.57 parts by mass of a modified polyamide-based resin (surface electric charge: 0.4 meq/g, solid concentration: 53% by mass, product name: SPI203 (50) H, manufactured by Taoka Chemical Co., Ltd.) was added, followed by stirring. Thereafter, 5.0 parts by mass of an aqueous solution obtained by dissolving an ethylene-modified polyvinyl alcohol (product name: EXCEVAL RS-1717, manufactured by Kuraray Co., Ltd.), as a water-soluble polymer, in water to a solid concentration of 10% by mass, was further added. To the resulting mixture, 0.30 parts by mass of a 25% by mass aqueous ammonia solution was further added, followed by stirring. Further, dilution water was added to a solid concentration of 19% by mass, to prepare a barrier layer coating material.

The thus prepared barrier layer coating material was coated on one surface of a paper substrate (OK Pienas, manufactured by Oji Materia Co., Ltd.) having a basis weight of 330 g/m², such that the solid content was 5 g/m².

A solvent-based adhesive (urethane-based, DICDRY LX-500/K W-75, manufactured by DIC corporation) was coated on an L-LDPE film having a thickness of 40 µm (FC-S, manufactured by Mitsui Chemicals Tohcello, Inc.; metallocene grade) and dried to a dry weight of 4 g/m², to form an adhesive layer. Thereafter, the resulting adhesive layer and the above-prepared barrier layer were pasted together by the dry lamination method, followed by aging for three days at 40°C, to laminate the barrier layer, the adhesive layer and the sealant layer on one surface of the paper substrate. Further, a polyethylene resin (Novatec LD LC 600A, manufactured by Japan Polyethylene Corporation) was coated to a thickness of 20 µm (basis weight: about 18 g/m²) by the extrusion lamination method, on the other surface of the paper substrate, to form a thermoplastic resin layer (LDPE layer), thereby obtaining a laminate.

### < Example 2 >

A laminate was obtained in the same manner as in Example 1, except that the sealant layer (LDPE layer) was formed by coating the resin on the barrier layer to a thickness of 40 µm (weight: about 37 g/m²) by the extrusion lamination method, without using an adhesive.

### < Example 3 >

A laminate was obtained in the same manner as in Example 1, except for the following changes. Seventy parts by mass of kaolin (Contour Xtreme, manufactured by Imerys S.A., aspect ratio: 33, average particle diameter d50: 0.26 µm) and 30 parts by mass (solid content) of a styrene-acrylic resin binder (ACRONAL S504, manufactured by BASF SE, glass transition temperature: 5°C) were mixed, to prepare an undercoating layer coating liquid. Before coating the barrier layer coating material, the resulting undercoating layer coating material was coated on one surface of a paper substrate (OK Pienas, manufactured by Oji Materia Co., Ltd.) having a basis weight of 330 g/m², such that the solid content was 6 g/m², and then the barrier layer coating material was coated on top thereof, to a dry weight of 3 g/m².

### < Example 4 >

A laminate was obtained in the same manner as in Example 3, except that the sealant layer (LDPE layer) was formed by coating the resin on the barrier layer to a thickness of 40 µm (weight: about 37 g/m²) by the extrusion lamination method, without using an adhesive.

### < Example 5 >

A laminate was obtained in the same manner as in Example 4, except that 1 part by mass (solid content) of polyethyleneimine (EPOMIN P-1000, manufactured by Nippon Shokubai Co., Ltd.) was further added to the barrier layer coating material.

### < Example 6 >

A laminate was obtained in the same manner as in Example 1, except that a heat-sealable polyester film having a thickness of 30 µm (DE046, manufactured by Toyobo Co., Ltd) was used instead of the L-LDPE film having a thickness of 40 µm.

### < Example 7 >

A laminate was obtained by coating a polyethylene resin (Novatec LD LC600A, manufactured by Japan Polyethylene Corporation) to a thickness of 20 µm (weight: about 18 g/m²) by the extrusion lamination method, on the sealant layer (L-LDPE layer) of the paper laminate obtained in Example 1, to form another sealant layer (LDPE layer).

### < Example 8 >

A laminate was obtained in the same manner as in Example 1, except that, instead of forming the thermoplastic resin layer using LDPE by the extrusion lamination method, the thermoplastic resin layer was formed by coating a coating material obtained by diluting an aqueous acrylic dispersion (solid concentration: 42% by mass, product name: BRITONE FC-640V, manufactured by Sakata Inx Co., Ltd.) with water to a solid concentration of 22% by mass, such that the solid content was 5 g/m².

### < Example 9 >

A laminate was obtained in the same manner as in Example 1, except that a coating material obtained by diluting an aqueous acrylic dispersion (solid concentration: 42% by mass, product name: BRITONE FC-640V, manufactured by Sakata Inx Co., Ltd.; a styrene-acrylic copolymer) with water to a solid concentration of 22% by mass, was used as a heat seal layer coating material, and the coating material was coated on the barrier layer such that the solid content was 10 g/m², to form the sealant layer.

### < Example 10 >

A laminate was obtained in the same manner as in Example 9, except that, instead of forming the thermoplastic resin layer using LDPE by the extrusion lamination method, the thermoplastic resin layer was formed by coating a coating material obtained by diluting an aqueous acrylic dispersion (solid concentration: 42% by mass, product name: BRITONE FC-640V, manufactured by Sakata Inx Co., Ltd.; a styrene-acrylic copolymer) with water to a solid concentration of 22% by mass, such that the solid content was 5 g/m².

### < Example 11 >

A laminate was obtained in the same manner as in Example 1, except that a paper substrate having a basis weight of 220 g/m² was used as the paper substrate.

### <Example 12 >

A laminate was obtained in the same manner as in Example 1, except that 0.19 parts of the modified polyamide-based resin were added.

### < Example 13 >

A laminate was obtained in the same manner as in Example 1, except that 0.95 parts of the modified polyamide-based resin were added.

### < Example 14 >

A laminate was obtained in the same manner as in Example 1, except that a heat-sealable, silica-alumina binary vapor deposited polyester film (ECOSYAR SS VE034, manufactured by Toyobo Co., Ltd,) was used as the sealant layer, instead of the L-LDPE film having a thickness of 40 µm, and that a solvent-based adhesive (urethane-based, DICDRY LX-500/K W-75, manufactured by DIC Corporation) was coated on the surface of the above-described film on the side provided with the vapor deposited layer, and dried, to a dry weight of 4 g/m², to form an adhesive layer, and then the adhesive layer and the barrier layer were pasted together by the dry lamination method.

### < Example 15 >

A laminate was obtained in the same manner as in Example 14, except that an adhesive having barrier properties (urethane-based, PASLIM VM001/108CP, manufactured by DIC Corporation) was used as the adhesive, to form the adhesive layer.

### < Example 16 >

A laminate was obtained in the same manner as in Example 1, except that the self-emulsifying emulsion of an ethylene-acrylic acid copolymer was added in an amount of 6.8 parts by mass, the self-emulsifying aqueous emulsion of hydroxypolyurethane was added in an amount of 23.4 parts by mass, and the aqueous solution of the ethylene-modified polyvinyl alcohol (solid concentration: 10% by mass) was added in an amount of 10.0 parts by mass, to prepare the barrier layer coating material.

### < Example 17 >

A heat-sealable laminate was obtained in the same manner as in Example 1, except that a dispersion of a polyurethane containing a structural unit derived from metaxylylene diisocyanate (solid concentration: 30% by mass, product name: TAKELAC WPB-341 (30), manufactured by Mitsui Chemicals, Inc.) was used, instead of the self-emulsifying aqueous emulsion of hydroxypolyurethane (solid concentration: 30% by mass, product name: HPU-WO13A, manufactured by Dainichiseika Color & Chemicals Mfg. Co., Ltd.) in the barrier layer coating material. When the polyurethane resin described above was subjected to ¹H-NMR measurement, the content of the structural unit derived from metaxylylene diisocyanate with respect to the total amount of polyisocyanate-derived structural units was 50% by mole or more. Further, the polyurethane resin had a glass transition temperature of 130°C.

### < Comparative Example 1 >

A laminate was obtained in the same manner as in Example 1, except that the barrier layer coating material was not coated on the paper substrate.

### < Comparative Example 2 >

A laminate was obtained in the same manner as in Example 3, except that the clay coat layer coating liquid shown in the following Table 1 was coated on the paper substrate such that the coating amount in dry weight was 6.0 g/m², by the blade method, and dried, and then the barrier layer coating liquid shown in the following Table 2 was coated on top thereof, such that the coating amount in dry weight was 3.0 g/m², by the air knife method.

**Table 1**

| Raw material | Mixed mount |
|---|---|
| Fine kaolin (HYDRAGLOSS, manufactured by KaMin LLC) | 60.0 parts |
| Engineered kaolin (Capim DG, manufactured by Imerys S.A.) | 20.0 parts |
| Sodium polyarylate | 0.5 parts |
| Heavy calcium carbonate (FMT-90, manufactured by Fimatec Ltd.) | 20.0 parts |
| Syrene-butadiene-based copolymerized latex (PTN8110, manufactured by Zeon Japan Co., Ltd.) | 20.0 parts |
| Oxidized starch (Mermaid M210, manufactured by Shikishima Starch MFG. Co., Ltd.) | 2.0 parts |
| Water | 71.7 parts |

**Table 2**

| Raw material | Mixed mount |
|---|---|
| Engineered kaolin (BARRISURF HX, manufactured by Imerys S.A.) | 100.0 parts |
| Sodium polyacrylate | 0.2 parts |
| Polyethyleneimine | 3.0 parts |
| Polyvinyl alcohol (PVA 117, manufactured by Kuraray Co., Ltd.) | 100.0 parts |
| Water | 1801.8 parts |

### < Comparative Example 3 >

A laminate was obtained in the same manner as in Example 1, except that the synthesized mica was not added to the barrier layer coating material.

### < Comparative Example 4 >

A laminate was obtained in the same manner as in Example 1, except that the cationic resin was not added to the barrier layer coating material.

### < Comparative Example 5 >

On the alumina vapor-deposited surface of a one side-alumina vapor-deposited PET film having a thickness of 12 µm (Barrialox 1031HG, manufactured by Toray Industries, Inc.), a solvent-based adhesive having no gas barrier properties (DICDRY LX-500/KW-75, manufactured by DIC Graphics Corporation) was coated to a dry weight of 4 g/m², to form an adhesive layer. Thereafter, an L-LDPE film having a thickness of 60 µm (FC-S, manufactured by Mitsui Chemicals Tohcello, Inc.; metallocene grade), as a sealant layer, was pasted on the adhesive layer of the one side-alumina vapor-deposited PET film. The resulting laminated film was pasted on one surface of a paper substrate (OK Pienas, manufactured by Oji Materia Co., Ltd.) having a basis weight of 330 g/m² by the extrusion sandwich lamination method, by coating thereon an ethylene-methacrylic acid copolymer (EMAA, NUCREL N0908C, manufactured by Dow-Mitsui Polychemicals Co., Ltd.) as an adhesive to a thickness of 20 µm, such that the adhesive surface of the paper substrate and the one side-alumina vapor-deposited PET film were adhered with each other. On the other surface of the paper substrate, a polyethylene resin (Novatec LD LC600A, manufactured by Japan Polyethylene Corporation) was coated to a thickness of 20 µm (weight: about 18 g/m²) by the extrusion lamination method, to form a resin layer (LDPE layer), thereby obtaining a laminate.

The following evaluations were carried out for the thus obtained laminates of Examples 1 to 16 and Comparative Examples 1 to 5. The results are shown in Table 3 and Table 4.

### [Oxygen Permeability]

Using an apparatus for measuring oxygen permeability (OX-TRAN 2/22, Manufactured by MOCON Inc.), the oxygen permeability of each laminate was measured under the conditions of a temperature of 23°C and a relative humidity of 50%, or a temperature of 23°C and a relative humidity of 85%. Specifically, the oxygen permeability at a temperature of 23°C and a relative humidity of 50%, or at a temperature of 23°C and a relative humidity of 85%, was measured in accordance with JIS K 7126-2: 2006, for each of the laminates obtained in the Examples and Comparative Examples. A lower value of the oxygen permeability indicates better oxygen barrier properties.

### [Water Vapor Permeability]

The water vapor permeability of each laminate was measured in accordance with Method B (cup method) (temperature: 40°C ± 0.5°C, relative humidity: 90% ± 2%) described in JIS-Z-0208: 1976, with the sealant layer arranged facing the inner side.

### [Ratio of Weight of Paper Substrate]

The ratio of the weight of the paper substrate in each laminate was determined by calculating the percentage of the weight of the paper substrate with respect to the total weight of the laminate, as follows. (Ratio of weight of paper substrate) = (weight of paper substrate)/(weight of laminate) × 100

### [Lamination Adhesion]

Two laminates, as one set, were layered such that the sealant layers face each other, and heat-sealed under the conditions of 180°C, 0.2 MPa and one second, using a heat seal tester (TP-701-B, manufactured by Tester Sangyo Co., Ltd.). The heat-sealed test piece was left to stand in a room controlled to a temperature of 23°C ± 1°C and a humidity of 50% ± 2%, for 4 hours or more. Subsequently, the heat-sealed test piece was cut into a width of 15 mm, subjected to T-shape peeling at a tensile speed of 300 mm/min, using a tensile tester, and the fracture behavior was evaluated by visual observation. When the paper substrate is fractured, it indicates that the adhesion between the respective layers is high, and thus, the lamination adhesion was evaluated as good.
A: The paper substrate is fractured.
B: A fracture occurred between the paper and the sealant layer, and the paper substrate is not fractured.

**Table 3**

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Thermoplastic resin layer | | | LDPE | LDPE | LDPE | LDPE | LDPE | LDPE | LDPE | Aqueous acrylic dispersion | LDPE | Aqueous acrylic dispersion |
| Paper substrate | | | 330g/m² | 330g/m² | 330g/m² | 330g/m² | 330g/m² | 330g/m² | 330g/m² | 330g/m² | 330g/m² | 330g/m² |
| Clay coat layer | | | | | Yes | Yes | | | | | | |
| Barrier layer Solid content ratio (parts) | Polyurethane resin | Hydroxypolyurethane | 80 | 80 | 80 | 80 | 80 | 80 | 80 | 80 | 80 | 80 |
| | | TAKELAC WPB-341 | | | | | | | | | | |
| | Water-suspendable polymer | Ethylene-acrylic acid copolymer | 15 | 15 | 15 | 15 | 15 | 15 | 15 | 15 | 15 | 15 |
| | Water-soluble polymer | Polyvinyl alcohol | 5 | 5 | 5 | 5 | 5 | 5 | 5 | 5 | 5 | 5 |
| | | Polyethyleneimine | | | | | 1 | | | | | |
| | Swellable layered silicate | Swellable mica | 20 | 20 | 20 | 20 | 20 | 20 | 20 | 20 | 20 | 20 |
| | Cationic resin | Modified polyamide resin | 3 | 3 | 3 | 3 | 3 | 3 | 3 | 3 | 3 | 3 |
| | Coating amount | | 5 | 5 | 3 | 3 | 5 | 5 | 5 | 5 | 5 | 5 |
| Adhesive | | | Yes | | Yes | | | Yes | Yes | Yes | | |
| Sealant layer | Lamination (film) | | L-LDPE | | L-LDPE | | | Polyester | L-LDPE | L-LDPE | | |
| | Lamination (extrusion) | | | LDPE | | LDPE | LDPE | | LDPE | | | |
| | Coating | | | | | | | | | | Aqueous acrylic dispersion | Aqueous acrylic dispersion |
| Evaluation | Oxygen permeability (23°C, 50% RH) | | 0.3 | 2 | 0.2 | 1 | 2 | 0.3 | 0.3 | 0.3 | 0.3 | 0.3 |
| | Oxygen permeability (23°C, 85% RH) | | 1 | 5 | 0.5 | 3 | 5 | 1 | 1 | 1 | 1 | 1 |
| | Water vapor permeability | | 5 | 8 | 3 | 4 | 7 | 9 | 4 | 8 | 7 | 9 |
| | Ratio of weight of paper substrate | | 84 | 85 | 83 | 84 | 85 | 84 | 80 | 88 | 91 | 94 |
| | Lamination adhesion | | A | A | A | A | A | A | A | A | A | A |

**Table 4**

| | | | Example 11 | Example 12 | Example 13 | Example 14 | Example 15 | Example 16 | Example 17 |
|---|---|---|---|---|---|---|---|---|---|
| Thermoplastic resin layer | | | LDPE | LDPE | LDPE | LDPE | LDPE | LDPE | LDPE |
| Paper substrate | | | 220g/m² | 330g/m² | 330g/m² | 330g/m² | 330g/m² | 330g/m² | 330g/m² |
| Clay coat layer | | | | | | | | | |
| Barrier layer Solid content ratio (parts) | Polyurethane resin | Hydroxypolyurethane | 80 | 80 | 80 | 80 | 80 | 70 | |
| | | TAKELAC WPB-341 | | | | | | | 80 |
| | Water-suspendable polymer | Ethylene-acrylic acid copolymer | 15 | 15 | 15 | 15 | 15 | 20 | 15 |
| | Water-soluble polymer | Polyvinyl alcohol | 5 | 5 | 5 | 5 | 5 | 10 | 5 |
| | | Polyethyleneimine | | | | | | | |
| | Swellable layered silicate | Swellable mica | 20 | 20 | 20 | 20 | 20 | 20 | 20 |
| | Cationic resin | Modified polyamide resin | 3 | 1 | 5 | 3 | 3 | 3 | 3 |
| | Coating amount | | 5 | 5 | 5 | 5 | 5 | 5 | 5 |
| Adhesive | | | Yes | Yes | Yes | Yes | Yes (With gas barrier properties) | Yes | Yes |
| Sealant layer | Lamination (film) | | L-LDPE | L-LDPE | L-LDPE | Vapor deposited polyester film | Vapor deposited polyester film | L-LDPE | L-LDPE |
| | Lamination (extrusion) | | | | | | | | |
| | Coating | | | | | | | | |
| Evaluation | Oxygen permeability (23°C, 50% RH) | | 0.3 | 0.3 | 0.3 | 0.2 | 0.1 | 0.3 | 0.5 |
| | Oxygen permeability (23°C, 85% RH) | | 1 | 1 | 1 | 0.5 | 0.1 | 0.8 | 3 |
| | Water vapor permeability | | 5 | 9 | 6 | 1 | 0.5 | 7 | 9 |
| | Ratio of weight of paper substrate | | 77 | 84 | 84 | 83 | 83 | 84 | 84 |
| | Lamination adhesion | | A | A | A | A | A | A | A |

**Table 5**

| | | | Comparative Example1 | Comparative Example2 | Comparative Example3 | Comparative Example4 | Comparative Example5 |
|---|---|---|---|---|---|---|---|
| Thermoplastic resin layer | | | LDPE | LDPE | LDPE | LDPE | LDPE |
| Paper substrate | | | 330g/m² | 330g/m² | 330g/m² | 330g/m² | 330g/m² |
| Clay coat layer | | | | Yes | Yes | Yes | |
| Barrier layer Solid content ratio (parts) | Polyurethane resin | Hydroxypolyurethane | | | 80 | 80 | |
| | | TAKELAC WPB-341 | | | | | |
| | Water-suspendable polymer | Ethylene-acrylic acid copolymer | | 100 | 15 | 15 | |
| | Water-soluble polymer | Polyvinyl alcohol | | | 5 | 5 | |
| | | Polyethyleneimine | | | | | |
| | Swellable layered silicate | Swellable mica | | | 0 | 20 | |
| | Non-swellable layered silicate | Kaolin | | 100 | | | |
| | Cationic resin | Modified polyamide resin | | | 3 | 0 | |
| | Coating amount | | | | 5 | 5 | |
| Sandwich lamination | | | | | | | EMAA |
| Barrier film | | | | | | | Almina-vapor deposited PET film |
| Adhesive | | | Yes | Yes | Yes | Yes | Yes |
| Sealant layer | Lamination (film) | | L-LDPE | L-LDPE | L-LDPE | L-LDPE | L-LDPE |
| | Lamination (extrusion) | | | | | | |
| | Coating | | | | | | |
| Evaluation | Oxygen permeability (23°C, 50% RH) | | 2000 < | 50 | 20 | 0.3 | 1 |
| | Oxygen permeability (23°C, 85% RH) | | 2000 < | 100 | 100 | 1 | 1 |
| | Water vapor permeability | | 12 | 12 | 12 | 12 | 1 |
| | Ratio of weight of paper substrate | | 85 | 83 | 84 | 84 | 73 |
| | Lamination adhesion | | A | A | A | B | A |

## Claims

1. A laminate comprising a thermoplastic resin layer, a paper substrate layer, a barrier layer and a sealant layer, in the order mentioned,
wherein the barrier layer comprises a polyurethane resin, a swellable layered silicate, and a cationic resin.

2. The laminate according to claim 1, wherein the polyurethane resin comprises at least one selected from the group consisting of a polyurethane containing a structural unit derived from metaxylylene diisocyanate, and hydroxypolyurethane.

3. The laminate according to claim 1 or 2, wherein the barrier layer comprises from 1.0 to 20.0% by mass of the cationic resin.

4. The laminate according to any one of claims 1 to 3, wherein the barrier layer comprises from 30.0 to 80.0% by mass of the polyurethane resin.

5. The laminate according to any one of claims 1 to 4, wherein the barrier layer comprises from 5.0 to 30.0% by mass of the swellable layered silicate.

6. The laminate according to any one of claims 1 to 5,
wherein the barrier layer further comprises at least one selected from the group consisting of a water-suspendable polymer other than the polyurethane resin and a water-soluble polymer other than the polyurethane resin,
wherein the water-suspendable polymer comprises an olefin-unsaturated carboxylic acid-based copolymer, and
wherein the water-soluble polymer comprises at least one selected from the group consisting of a vinyl alcohol-based polymer and a polyalkyleneimine.

7. The laminate according to any one of claims 1 **to 6,**
wherein the barrier layer further comprises the water-suspendable polymer other than the polyurethane resin, and the water-soluble polymer other than the polyurethane resin, and
wherein the barrier layer comprises the water-suspendable polymer and the water-soluble polymer, at least in the following combination (A) or (B):
(A) an ethylene-acrylic acid copolymer as the water-suspendable polymer, and polyvinyl alcohol as the water-soluble polymer; or
(B) an ethylene-acrylic acid copolymer as the water-suspendable polymer, and polyvinyl alcohol and polyethyleneimine as the water-soluble polymers.

8. The laminate according to claim 6 or 7, wherein the barrier layer comprises a total of from 2.0 to 50.0% by mass of the water-suspendable polymer other than the polyurethane resin and the water-soluble polymer other than the polyurethane resin.

9. The laminate according to any one of claims 6 to 8, wherein the ratio (the mass of the polyurethane resin: the total mass of the water-suspendable polymer and the water-soluble polymer) of the mass of the polyurethane resin and the total mass of the water-suspendable polymer other than the polyurethane resin and the water-soluble polymer other than the polyurethane resin, in the barrier layer, is from 50:50 to 95:5.

10. The laminate according to any one of claims 1 to 9, wherein the laminate comprises an undercoating layer between the paper substrate layer and the barrier layer.

11. The laminate according to any one of claims 1 to 10, wherein the sealant layer comprises a water-dispersible resin.

12. A paper product using the laminate according to any one of claims 1 to 11.
